# EUROPÄISCHE PATENTSCHRIFT

(11) **EP 3 543 059 B1**
(45) Veröffentlichungstag und Bekanntmachung des Hinweises auf die Patenterteilung: **14.07.2021**
(21) Anmeldenummer: 19157312.0
(22) Anmeldetag: 14.02.2019
(51) Int. Cl.: B60K 35/00, B60W 30/14, G02B 27/01

(54) **VERFAHREN ZUR BERECHNUNG EINER EINBLENDUNG VON ZUSATZINFORMATIONEN FÜR EINE ANZEIGE AUF EINER ANZEIGEEINHEIT, VORRICHTUNG ZUR DURCHFÜHRUNG DES VERFAHRENS SOWIE KRAFTFAHRZEUG UND COMPUTERPROGRAMM**
METHOD FOR CALCULATING THE INSERTION OF ADDITIONAL INFORMATION FOR DISPLAY ON A DISPLAY UNIT, DEVICE FOR CARRYING OUT THE METHOD, MOTOR VEHICLE AND COMPUTER PROGRAM
PROCÉDÉ DE CALCUL D'UNE SURIMPRESSION DES INFORMATIONS SUPPLÉMENTAIRES POUR UN AFFICHAGE SUR UNE UNITÉ D'AFFICHAGE, DISPOSITIF DE MISE EN OEUVRE DU PROCÉDÉ, AINSI QUE VÉHICULE AUTOMOBILE ET PROGRAMME INFORMATIQUE

(30) Priorität: 20.03.2018 DE 102018204254
(43) Veröffentlichungstag der Anmeldung: 25.09.2019
(73) Patentinhaber: VOLKSWAGEN AKTIENGESELLSCHAFT, 38440 Wolfsburg (DE)
(72) Erfinder: Kleen, Andro, 38124 Braunschweig (DE); Wesseling, Anne-Marie, 2411 RX Bodegraven (NL); Wyszka, Robert Jan, 30169 Hannover (DE); Haar, Adrian, 30173 Hannover (DE)

(56) Entgegenhaltungen:
- EP-A1- 3 031 655
- EP-A1- 3 147 149
- US-A1- 2016 052 394
- US-A1- 2018 023 970

## Beschreibung

Der Vorschlag betrifft das technische Gebiet von Fahrerinformationssystemen, die auch unter dem Begriff Infotainmentsystem bekannt sind. Solche Systeme werden vor allem in Fahrzeugen eingesetzt. Es besteht aber auch die Möglichkeit des Einsatzes der Erfindung bei Fußgängern, Radfahrern, etc. mit Datenbrille. Der Vorschlag betrifft weiterhin eine entsprechend ausgelegte Vorrichtung zur Durchführung des Verfahrens sowie ein Kraftfahrzeug und ein Computerprogramm.

Zur Zeit wird intensiv an Technologien gearbeitet, die später ein autonomes Fahren ermöglichen sollen. Ein erster Ansatz ist dabei, den Fahrer nicht komplett von seinen Aufgaben zu entlasten, sondern dafür Sorge zu tragen, dass der Fahrer jederzeit die Steuerung des Fahrzeuges übernehmen kann. Der Fahrer nimmt außerdem Überwachungsfunktionen wahr. Durch neuere Technologien im Bereich der Fahrerinformationssysteme wie Head-Up Display (HUD) ist es möglich, den Fahrer besser über das Geschehen im Umfeld seines Fahrzeuges zu informieren.

Für die nahe Zukunft ist deshalb davon auszugehen, dass systemseitig durch den Einsatz neuerer Technologien (Fahrzeug-zu-Fahrzeug-Kommunikation, Einsatz von Datenbanken, Fahrzeugsensorik, etc.) umfassende Informationen über Objekte (insb. Fahrzeuge) im direkten Umfeld des eigenen Fahrzeugs verfügbar sein werden. Im Bereich Fahrzeugsensorik werden insbesondere die folgenden Komponenten genannt, die eine Umfeldbeobachtung ermöglichen: RADAR-Geräte entsprechend Radio Detection and Ranging, LIDAR-Geräte, entsprechend Light Detection and Ranging, hauptsächlich für den Bereich Abstandserfassung / -warnung, und Kameras mit entsprechender Bildverarbeitung für den Bereich der Objekterkennung. Diese Daten über die Umwelt können als Basis für systemseitige Fahrempfehlungen, Warnungen, etc. herangezogen werden. Beispielsweise sind so Anzeigen / Warnungen darüber denkbar, in welche Richtung (möglicherweise in die eigene Trajektorie) ein anderes, umgebendes Fahrzeug abbiegen will.

Die Fahrzeug-zu-Fahrzeug-Kommunikation ist mittlerweile auch mittels Mobilkommunikation mit Systemen wie LTE entsprechend Long Term Evolution möglich. Hier wurde von der Organisation 3GPP eine Spezifikation mit Namen LTE V2X verabschiedet. Als Alternative stehen auf WLAN-Technologie beruhende Systeme für die Fahrzeug-Direktkommunikation zur Verfügung, insbesondere das System nach WLAN p.

Der Begriff "autonomes Fahren" wird in der Literatur teilweise unterschiedlich benutzt.

Zur Klärung dieses Begriffs wird deshalb hier noch folgender Einschub präsentiert. Unter autonomem Fahren (manchmal auch automatisches Fahren, automatisiertes Fahren oder pilotiertes Fahren genannt) ist die Fortbewegung von Fahrzeugen, mobilen Robotern und fahrerlosen Transportsystemen zu verstehen, die sich weitgehend autonom verhalten. Es gibt verschiedene Abstufungen des Begriffs autonomes Fahren. Dabei wird auf bestimmten Stufen auch dann von autonomen Fahren gesprochen, wenn noch ein Fahrer im Fahrzeug befindlich ist, der ggfs. nur noch die Überwachung des automatischen Fahrvorgangs übernimmt. In Europa haben die verschiedenen Verkehrsministerien (in Deutschland war die Bundesanstalt für Straßenwesen beteiligt) zusammengearbeitet und die folgenden Autonomiestufen definiert.
- Level 0: "Driver only", der Fahrer fährt selbst, lenkt, gibt Gas, bremst etc.
- Level 1: Bestimmte Assistenzsysteme helfen bei der Fahrzeugbedienung (u.a. ein Abstandsregelsystem - Automatic Cruise Control ACC).
- Level 2: Teilautomatisierung. U.a. automatisches Einparken, Spurhaltefunktion, allgemeine Längsführung, Beschleunigen, Abbremsen etc. werden von den Assistenzsystemen übernommen (u.a. Stauassistent).
- Level 3: Hochautomatisierung. Der Fahrer muss das System nicht dauernd überwachen. Das Fahrzeug führt selbstständig Funktionen wie das Auslösen des Blinkers, Spurwechsel und Spurhalten durch. Der Fahrer kann sich anderen Dingen zuwenden, wird aber bei Bedarf innerhalb einer Vorwarnzeit vom System aufgefordert, die Führung zu übernehmen. Diese Form der Autonomie ist auf Autobahnen technisch machbar. Der Gesetzgeber arbeitet darauf hin, Level 3-Fahrzeuge zuzulassen. Die gesetzlichen Rahmenbedingungen wurden dafür bereits geschaffen.
- Level 4: Vollautomatisierung. Die Führung des Fahrzeugs wird dauerhaft vom System übernommen. Werden die Fahraufgaben vom System nicht mehr bewältigt, kann der Fahrer aufgefordert werden, die Führung zu übernehmen.
- Level 5: Kein Fahrer erforderlich. Außer dem Festlegen des Ziels und dem Starten des Systems ist kein menschliches Eingreifen erforderlich.

Automatisierte Fahrfunktionen ab Stufe 3 nehmen dem Fahrer die Verantwortung für die Steuerung des Fahrzeugs ab.

Aufgrund der derzeitigen Entwicklung hin zu höheren Autonomiestufen, wo aber viele Fahrzeuge nach wie vor noch vom Fahrer gesteuert werden, ist davon auszugehen, dass entsprechende zusätzliche Informationen mittelfristig bereits für manuell geführte Fahrzeuge und nicht erst langfristig für hochautomatisierte Systeme genutzt werden können. Dabei kann die im Folgenden noch näher beschriebene Lösung sowohl für manuell gesteuerte als auch für automatisch gesteuerte Fahrzeuge eingesetzt werden.

Für die Fahrer-Fahrzeug-Interaktion stellt sich hierbei die Frage, wie diese Informationen so dargestellt werden können, dass ein echter Mehrwert für den menschlichen Fahrer entsteht und er die bereitgestellten Informationen auch schnell, respektive intuitiv, verorten kann. Folgende Lösungen in diesem Bereich sind dabei schon aus dem Stand der Technik bekannt.

Eine Zukunftsvision in der Automobilbranche ist es, die Windschutzscheibe des eigenen Fahrzeugs mit virtuellen Elementen bespielen zu können, um dem Fahrer einige Vorteile zu ermöglichen. Genutzt wird die sogenannte "Augmented Reality"-Technologie (AR). Weniger geläufig ist der entsprechende deutschsprachige Begriff der "erweiterten Realität". Dabei wird die reale Umgebung mit virtuellen Elementen angereichert. Das hat den Vorteil, dass durch die positionsgenaue Verortung der virtuellen Elemente in der realen Umwelt ein geringerer kognitiver Aufwand seitens des Fahrers erreicht wird, da keine Interpretation einer abstrahierenden Grafik erfolgen muss, sondern ein intuitives Verständnis im Sinne der normalen Wahrnehmungsgewohnheiten stattfinden kann. Hinsichtlich des automatischen Fahrens kann ebenfalls ein Mehrwert erzeugt werden.

Zurzeit werden Head-Up Displays (HUD) in den Fahrzeugen eingesetzt. Diese haben auch den Vorteil, dass das Bild des HUD näher an der realen Umwelt erscheint. Bei diesen Displays handelt es sich eigentlich um Projektionseinheiten, die ein Bild auf die Windschutzscheibe projizieren. Dieses Bild befindet sich jedoch aus der Sicht des Fahrers je nach Bauart des Moduls wenige Meter bis 15 Meter vor dem Fahrzeug. Dies hat den Vorteil, dass die eingeblendeten Informationen so präsentiert werden, dass die Augen des Fahrer selbst von Akkommodationstätigkeit entlastet werden.

Bei der AR-Technologie setzt sich das durch das HUD projizierte "Bild" dabei folgendermaßen zusammen: Es handelt sich dabei weniger um ein virtuelles Display, sondern eher um eine Art "Schlüsselloch" in die virtuelle Welt. Die virtuelle Umgebung wird theoretisch über die reale Welt gelegt und enthält die virtuellen Objekte, die den Fahrer bei der Fahrt unterstützen und informieren. Die begrenzte Anzeigefläche des HUD hat zur Folge, dass davon ein Ausschnitt gesehen werden kann. Man schaut also durch die Anzeigefläche des HUD auf den Ausschnitt der virtuellen Welt. Da diese virtuelle Umgebung die reale Umgebung ergänzt, spricht man in diesem Fall auch von einer "Mixed Reality".

Aus der DE 10 2011 082 609 A1 ist ein Verfahren zur Markierung eines relevanten Punktes für einen Fahrer eines Fahrzeugs bekannt. Bei dem Verfahren wird die Position eines relevanten Punktes in einem Vorfeld des Fahrzeuges bestimmt. Dieser Punkt wird in einem Schritt des Verfahrens mit einer Markierung kontaktanalog hervorgehoben. Dabei wird die Darstellungsart der Markierung abhängig von dem Abstand zwischen dem Fahrzeug und der Position des relevanten Punktes gewählt.

Aus der EP 2 857 247 A1 ist eine Vorrichtung und ein Verfahren für ein Fahrzeug bekannt, welches zur automatischen Längssteuerung ausgestaltet ist. Bei dem Verfahren werden die folgenden Schritte durchgeführt: Erfassen eines Führungsfahrzeug, wobei das Führungsfahrzeug ein direkt vor dem Fahrzeug fahrendes Fahrzeug ist. Bestimmen eines aktuellen von zumindest zwei Zuständen, welche eine aktuelle Reaktion des Fahrzeugs auf das Führungsfahrzeug beschreiben. Darstellen des aktuellen Zustands unterscheidbar von anderen der Zustände in animierter Form auf einer Anzeige.

Aus der DE 10 2011 112 943 A1 ist ein Verfahren zum Bereitstellen eines Fahrerassistenzsystems mit automatischer Längsregelung für ein Fahrzeug bekannt, bei dem der vorausliegende Streckenabschnitt auf einer Anzeigefläche visualisiert wird, wobei wenigstens ein graphisches Objekt, welches einer Funktion der automatischen Längsregelung zugeordnet ist, in dem visualisierten Streckenabschnitt dargestellt wird. Das Verfahren zum Bereitstellen eines Fahrerassistenzsystems mit automatischer Längsregelung ist dadurch gekennzeichnet, dass zu dem vorausliegenden Streckenabschnitt eine Videobildfolge aufgenommen und in Echtzeit auf der Anzeigefläche wiedergegeben wird und das wenigstens eine graphische Objekt der Videobildfolge überlagert wird. Die überlagerte Darstellung eines graphischen Objekts zur Fahrzeuglängsregelung mit einer Videobildfolge des vorausliegenden Streckenabschnitts in Echtzeit unterstützt den Fahrer in einer ganzheitlichen Erfassung der gegenwärtigen Fahrsituation.

Aus der DE 10 2011 121 763 A1 ist ein Verfahren zur Darstellung einer Abstandsinformation auf einer Anzeigevorrichtung eines Fahrzeuges bekannt. Das Verfahren zeichnet sich dadurch aus, dass mit Kamera ein Echtbild der vor dem Fahrzeug liegenden Fahrspur aufgenommen wird, und in Abhängigkeit wenigstens einer fahrdynamischen Größe des Fahrzeuges ein Sicherheitsabstand zu dem vorausfahrenden Fahrzeug ermittelt wird. Das Echtbild wird um einen virtuellen Bildanteil in Form eines Querbalkens erweitert, der den Sicherheitsabstand lagerichtig zum vorausfahrenden Fahrzeug anzeigt.

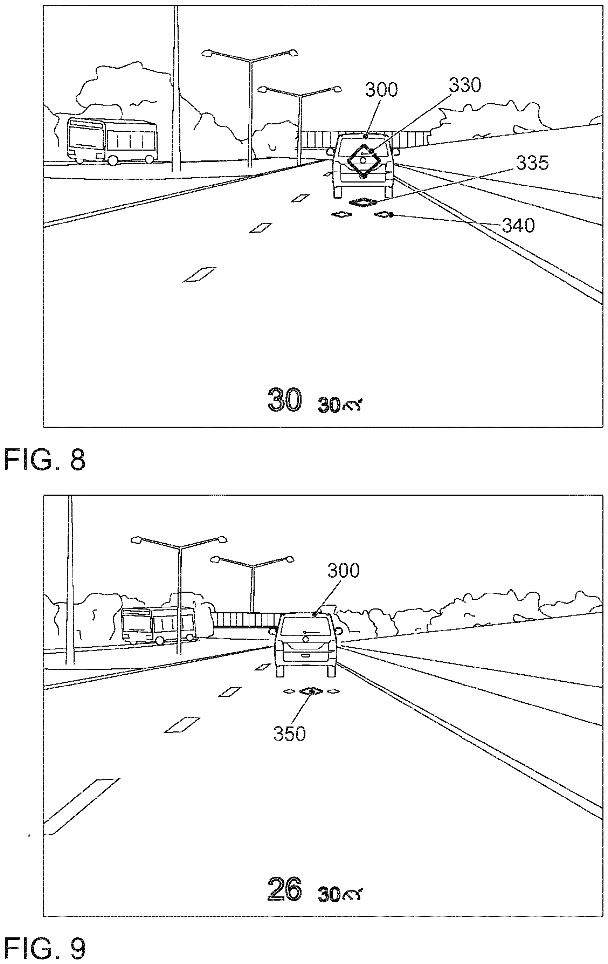

Aus der US 2018 / 023 970 A1 sind verschiedene Darstellungen von Zusatzinformationen für den Fahrer eines Fahrzeuges mit Hilfe eines Head-Up Displays bekannt. Darunter finden sich Darstellungen von HUD-Einblendungen für die Routenführung von Navigationssystemen. Dabei wird die Anwesenheit von einem vorausfahrenden Fahrzeug mit einer sogenannten "detection emphasized image" HUD-Einblendung hervorgehoben. In Fig. 9 bis 10 wird diese Einblendung als Querbalken über die Straße dargestellt. Dieser Querbalken nähert sich dem vorausfahrenden Fahrzeug an, wenn sich das Fahrzeug auf das vorausfahrende Fahrzeug zubewegt. In Fig. 11 ist schließlich gezeigt, dass sich der Querbalken in die Stirnseite einer Tunnelröhre umwandelt, wenn der Querbalken das vorausfahrende Fahrzeug erreicht.

Aus der EP 3 147 149 A1 ist ein HUD-Anzeigesystem für ein Fahrzeug bekannt. Die in Fig. 5 dargestellten Einblendungen entsprechen Varianten mit denen ein vorausfahrendes Fahrzeug hervorgehoben werden kann.

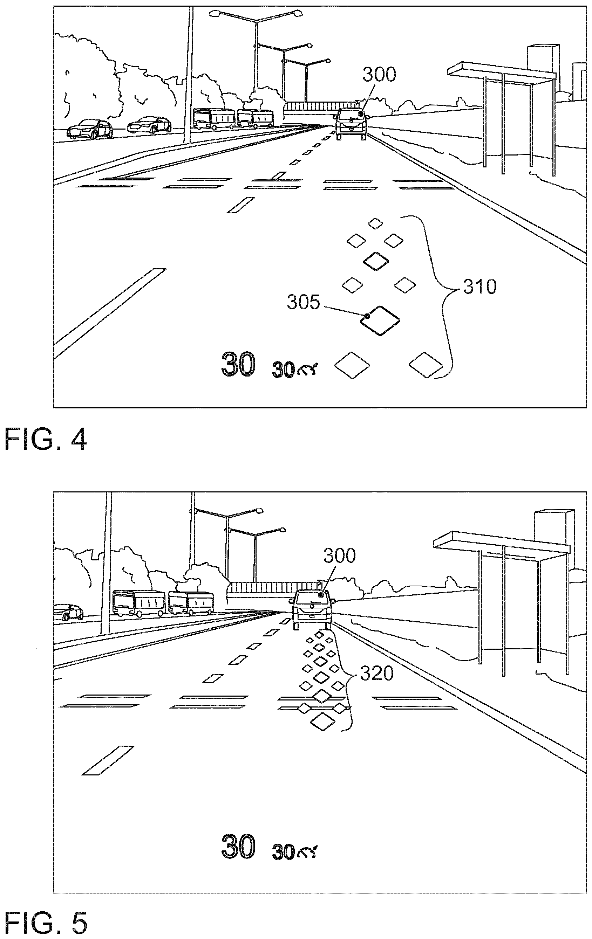

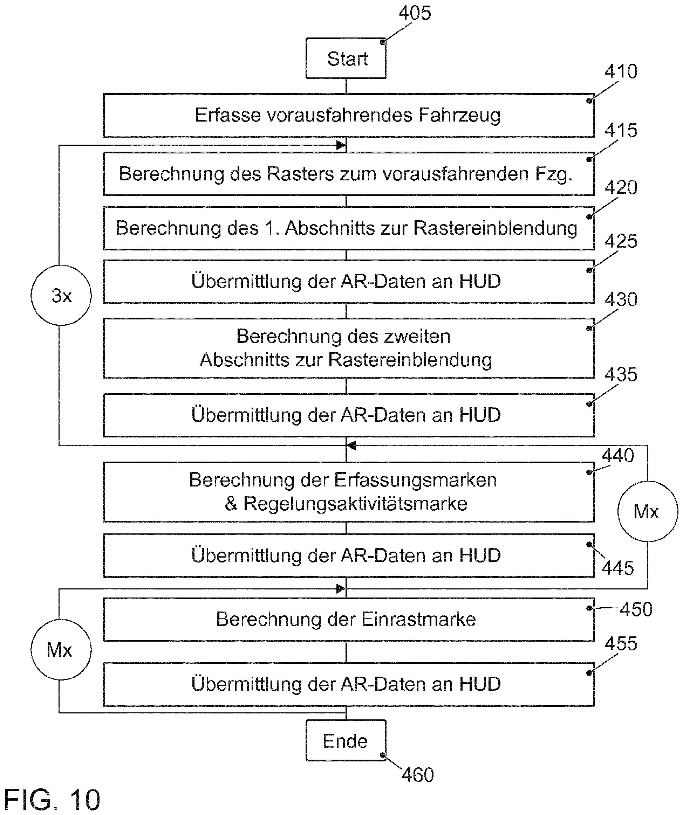

Das Dokument EP 3 031 655 A1 zeigt in Fig. 5 ein Navigationssystem mit HUD-System und Objekterkennungssensor. Die Fig. 10A bis Fig. 10E zeigen HUD-Einblendungen für die Fahrsituation mit einem entgegenkommenden Fahrzeug. Der Abstand zum entgegenkommenden Fahrzeug wird durch Anzeige eines sich bewegenden Symbols kenntlich gemacht. Bei Unterschreiten einer Distanz wird eine Aufforderung zum Bremsen eingeblendet.

Ein großer Vorteil der bisher bekannten "Augmented Reality"-Anzeigen (AR-Anzeigen) besteht darin, die entsprechenden Anzeigen direkt innerhalb bzw. als Teil der Umwelt darzustellen. Relativ naheliegende Beispiele beziehen sich meist auf den Bereich der Navigation. Während klassische Navigationsanzeigen (in herkömmlichen HUD) in der Regel schematische Darstellungen anzeigen (z.B. einen rechtwinklig verlaufenden Pfeil nach rechts) als Zeichen dafür, dass bei nächster Gelegenheit rechts abgebogen werden soll, bieten AR-Anzeigen wesentlich effektivere Möglichkeiten. Da die Anzeigen als "Teil der Umwelt" dargestellt werden können, sind äußerst schnelle und intuitive Interpretationen für den Nutzer möglich. Dennoch weisen die bisher bekannten Ansätze auch verschiedene Probleme auf, für die zum jetzigen Zeitpunkt keine Lösungen bekannt sind.

Die bekannten Lösungen sind mit verschiedenen Nachteilen behaftet. Dies wurde im Rahmen der Erfindung erkannt. Bei den bekannten Lösungen besteht das Problem, dass dem Fahrer nicht klar genug vermittelt wird, ob das System zur Längsführung des Fahrzeuges aktiv ist und ob es das vorausfahrende Fahrzeug erkannt hat und wie es selbsttätig die Längsführung relativ zum vorausfahrenden Fahrzeug vornimmt.

Es besteht also der Bedarf für weitere Verbesserungen bei der Längsführung eines Fahrzeuges und der diesbezüglichen Rückmeldung zum Fahrer über das Infotainment-System.

Die Erfindung setzt sich zur Aufgabe, einen solchen Ansatz zu finden.

Diese Aufgabe wird durch ein Verfahren zur Berechnung einer Einblendung von Zusatzinformationen für eine Anzeige auf einer Anzeigeeinheit, insbesondere ein Head-Up Display (HUD) eines Fahrzeuges oder eine Datenbrille gemäß Anspruch 1, eine Vorrichtung zur Durchführung des Verfahrens gemäß Anspruch 6 sowie ein Kraftfahrzeug gemäß Anspruch 9 und ein Computerprogramm gemäß Anspruch 10 gelöst. Dabei dient die Einblendung von Zusatzinformationen dem Zweck der Unterstützung des Fahrers bei der Längsführung des Fahrzeuges.

Die abhängigen Ansprüche beinhalten vorteilhafte Weiterbildungen und Verbesserungen der Erfindung entsprechend der nachfolgenden Beschreibung dieser Maßnahmen.

Die Lösung gemäß der Erfindung beruht darauf, die Einblendung der Zusatzinformation nach Art der erweiterten Realität entsprechend "augmented reality" kontaktanalog zu einem vorausfahrenden Fahrzeug zu berechnen. Dafür wird auch die Lage des vorausfahrenden Fahrzeuges erfasst. Das Verfahren ist dadurch gekennzeichnet, dass bei Annäherung an das vorausfahrende Fahrzeug eine Animationsgrafik so berechnet wird, dass ausgehend vom Beobachterfahrzeug die Animationsgrafik optional periodisch wiederholend abschnittsweise eingeblendet wird mit Hilfe einer Anzeigeeinheit. Dies macht den Fahrer darauf aufmerksam, dass eine Fahrerassistenzfunktion ein vorausfahrendes Fahrzeug erkannt hat und eine Regelungsfunktion in Bezug auf das vorausfahrende Fahrzeug einleitet.

Erfindungsgemäß wird bei dem ersten oder einem wiederkehrenden Einblenden des Endes der Animationsgrafik eine AR-Einblendung so berechnet, dass am Ende des vorausfahrenden Fahrzeuges kontaktanalog zum vorausfahrenden Fahrzeug wenigstens eine Objekterkennungsmarke gesetzt wird. Dies liefert dem Fahrer des Fahrzeuges den Hinweis, dass das Längsführungssystem eingerichtet ist und es ein vorausfahrendes Fahrzeug erkannt hat und relativ zu diesem jetzt arbeitet.

Dabei wird in einer vorteilhaften Variante die AR-Einblendung so berechnet, dass zwei Objekterkennungsmarken gesetzt werden, wobei eine Objekterkennungsmarke so berechnet wird, dass sie das Ende des Bereichs auf dem Boden hinter dem Fahrzeug markiert und die andere Objekterkennungsmarke das Heck des vorausfahrenden Fahrzeuges markiert. Dieses Vorgehen soll dem Fahrer die korrekte Objektwahrnehmung verständlich machen und eine für die Vertrauensausbildung notwendige Transparenz der technischen Prozesse herstellen. Diese Variante soll den Vorteil ausnutzen, dass die Markierung nicht in der Hochachse auf dem Fahrzeug liegt, sondern dezenter auf dem Untergrund. Zum anderen fallen so Positionierungsfehler nicht so stark auf (wenn die Objekterkennungsmarke nicht genau in der Mitte des Fahrzeugs liegt). Darüber hinaus kann die auf dem Boden liegende Markierung durch jegliche Animation der auf dem Boden liegenden Animationsgrafik besser erreicht werden bzw. manipuliert werden. Ein Beispiel ist die Verschiebung der Objekterkennungsmarke.

Zur Kenntlichmachung einer Annäherung oder Entfernung an das vorausfahrende Fahrzeug wird eine Regelungsaktivitätsmarke berechnet, die so berechnet wird, dass sie bei Annäherung zum vorausfahrenden Fahrzeug als Pfeil hin zum vorausfahrenden Fahrzeug zwischen Beobachterfahrzeug und vorausfahrendem Fahrzeug eingeblendet wird, und bei Entfernung vom vorausfahrenden Fahrzeug als Pfeil weg vom vorausfahrenden Fahrzeug zwischen Beobachterfahrzeug und vorausfahrendem Fahrzeug eingeblendet wird. Durch diese Maßnahme wird Auskunft über die Regelungsaktivität der Fahrfunktion gegeben.

Weiterhin wird erfindungsgemäß in einem Längsführungssystem zur Abstandsregelung oder Geschwindigkeitsregelung die Regelungsaktivitätsmarke so berechnet, dass sie bei einer Annäherung an das vorausfahrende Fahrzeug sich auf das vorausfahrende Fahrzeug hinzubewegt, wobei bei Erreichen des Sollabstandes oder der Sollgeschwindigkeit die Regelungsaktivitätsmarke so berechnet wird, dass sie das Ende der Animationsgrafik, an der Position des vorausfahrenden Fahrzeuges erreicht. Dann erfolgt die Berechnung so, dass die Regelungsaktivitätsmarke mit der Objekterkennungsmarke verschmolzen wird, wobei wenigstens ein Seitenteil der Regelungsaktivitätsmarke sich neben der Objekterkennungsmarke kontaktanalog anlagert.

In einer Weiterbildung des Vorschlages wird die Regelungsaktivitätsmarke so berechnet, dass sie die Regelungsaktivität des Längsführungssystems anzeigt. Dabei werden wenigstens drei verschiedene Zustände unterschieden, wobei ein in Fahrtrichtung gerichteter Pfeil gebildet wird, wenn die Sollgeschwindigkeit des Längsführungssystems noch größer ist als die Momentangeschwindigkeit des Beobachterfahrzeuges oder die Entfernung zum vorausfahrenden Fahrzeug noch größer ist als der Sollabstand, wobei ein nach hinten gerichteter Pfeil gebildet wird, wenn die Sollgeschwindigkeit des Geschwindigkeitsregelungssystems kleiner ist als die Momentangeschwindigkeit des Beobachterfahrzeuges, oder die Entfernung zum vorausfahrenden Fahrzeug noch kleiner ist als der Sollabstand, und wobei die Seitenteile der Regelungsaktivitätsmarke so positioniert werden, dass eine linienartige Regelungs-Einrastmarke gebildet wird, wenn die Ist-Geschwindigkeit mit der Sollgeschwindigkeit des Geschwindigkeitsregelungssystems übereinstimmt oder die Entfernung mit dem Sollabstand übereinstimmt. Diese Lösung bietet dem Fahrer vielerlei Informationen mit nur einer AR-Einblendung. Der Typ der Regelungsaktivitätsmarke zeigt ob Annäherung oder Entfernung zum vorausfahrenden Fahrzeug stattfindet. Auch die Neutralphase, bei der dem vorausfahrenden Fahrzeug gefolgt wird, wie beim Kolonnenfahren wird so vermittelt. Dem Fahrer wird durch diese Symbolik vermittelt, dass das Fahrzeug von jetzt an die Distanz zum vorausfahrenden Fahrzeug konstant halten wird. Die Positionierung der Regelungsaktivitätsmarke zwischen vorausfahrendem Fahrzeug und Beobachterfahrzeug gibt Aufschluss über das Einhalten des Sollabstandes.

In einer besonders vorteilhaften Variante wird die Animationsgrafik in Rasterform berechnet. Dabei besteht das Raster aus einer Vielzahl von Rasterelementen. Die Rasterform bietet neben der Erfüllung der Anforderungen geringe Verdeckung der Umwelt und zeitgleich eine ausreichende Fehlertoleranz, dass der menschliche Wahrnehmungsapparat aufgrund der evolutionsbiologischen Voraussetzungen mühelos in der Lage ist, die einzelnen Anzeigeelemente als zusammenhängenden Hinweis zu verstehen. Besonders relevant sind hierbei unerwünschte Verdeckungseffekte zu vermeiden, die mit AR-Anzeigen auftreten können. Dies gelingt einerseits durch Verwendung der Rasterform und andererseits durch Berechnung in der Art, dass sich das Raster lediglich bis zum vorausfahrenden Fahrzeug erstreckt. Auf diese Weise wird das Problem der "Durchdringung" bei AR-Einblendungen umgangen. Unter "Durchdringung" werden Darstellungsfälle verstanden, in denen eine AR-Anzeige eingeblendet wird (z.B. ein Navigationspfad), diese aber aus Sicht des Nutzers durch Objekte vor dem Fahrzeug "hindurchlaufen". Diese Effekte treten unter anderem dann auf, wenn ein anderes Fahrzeug vor dem eigenen fährt.

Für eine Vorrichtung zur Durchführung des Verfahrens gelten mit der entsprechend programmierten Recheneinheit die gleichen Vorteile, wie bei den entsprechenden Verfahrensschritte erwähnt.

Besonders vorteilhaft ist, wenn die Anzeigeeinheit der Vorrichtung als Head-Up Display ausgeführt ist. Statt eines Head-Up Displays kann in der Vorrichtung als Anzeigeeinheit eine Datenbrille oder ein Monitor eingesetzt werden, auf dem ein Kamerabild angezeigt wird, in das die Animationsgrafik eingeblendet wird.

In vorteilhafter Weise kann die erfindungsgemäße Vorrichtung in einem Kraftfahrzeug eingesetzt werden. Im Fahrzeug wird die Erfindung vorzugsweise so realisiert, dass die Anzeigeeinheit im Fahrzeug fest installiert ist, z.B. in Form eines Head-Up Displays. Trotzdem wäre eine mögliche Realisierungsform auch mit Hilfe einer Datenbrille möglich, wenn der Einsatz der Datenbrille beim Fahrer in Zukunft erlaubt wäre. Auch der Einsatz auf einem Mobile Device wie einem Smartphone oder Tablet-Computer käme in Betracht.

Wie erwähnt, kann die Erfindung in vorteilhafter Weise auch eingesetzt werden, wenn die Anzeigeeinheit einer Datenbrille entspricht. Dann lässt sich das erfindungsgemäße Verfahren selbst bei Fußgängern, Radfahrern, Kradfahrern usw. einsetzen.

Für ein Computerprogramm, das in der Recheneinheit der Vorrichtung zur Abarbeitung kommt, um das erfindungsgemäße Verfahren durchzuführen, gelten die entsprechenden Vorteile wie zu dem erfindungsgemäßen Verfahren beschrieben.

Ausführungsbeispiele der Erfindung sind in den Zeichnungen dargestellt und werden nachfolgend anhand der Figuren näher erläutert.

Es zeigen:
- Fig. 1: das Prinzip der Einblendung von Informationen in das Sichtfeld des Fahrers eines Fahrzeuges während der Fahrt mit Hilfe eines Head-Up Displays;
- Fig. 2: das typische Cockpit eines Fahrzeuges;
- Fig. 3: das Blockschaltbild des Infotainment-Systems des Fahrzeuges;
- Fig. 4: eine Darstellung einer ersten Rastereinblendung für die Anzeige der Phase des Einrichtens eines Längsführungssystems zum geschwindigkeitsrichtigen oder abstandsrichtigen Verfolgen eines vorausfahrenden Fahrzeuges;
- Fig. 5: eine Darstellung einer zweiten Rastereinblendung für die Anzeige der Phase des Einrichtens eines Längsführungssystems zum geschwindigkeitsrichtigen oder abstandsrichtigen Verfolgen eines vorausfahrenden Fahrzeuges;
- Fig. 6: eine Darstellung einer AR-Einblendung zur Bestätigung an den Fahrer, dass das Längsführungssystem aktiv ist und relativ zum vorausfahrenden Fahrzeug regelt;
- Fig. 7: eine Darstellung von den drei grundlegenden AR-Einblendungen für die Visualisierung der Regelungsaktivität des Längsführungssystems;
- Fig. 8: eine Darstellung einer AR-Einblendung für den Moment kurz bevor das Längsführungssystem durch die Regelungsaktivität den Sollabstand oder die Sollgeschwindigkeit bei der Verfolgung des vorausfahrenden Fahrzeuges erreicht hat;
- Fig. 9: eine Darstellung einer AR-Einblendung für den Moment in dem das Längsführungssystem durch die Regelungsaktivität den Sollabstand oder die Sollgeschwindigkeit bei der Verfolgung des vorausfahrenden Fahrzeuges erreicht hat; und
- Fig. 10: ein Flussdiagramm für ein Programm zur Berechnung von AR-Einblendungen für die Anzeige der verschiedenen Phasen des Einrichtens und der Regelungsaktivität eines Längsführungssystems zum geschwindigkeitsrichtigen oder abstandsrichtigen Verfolgen eines vorausfahrenden Fahrzeuges gemäß eines Ausführungsbeispiels der Erfindung.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

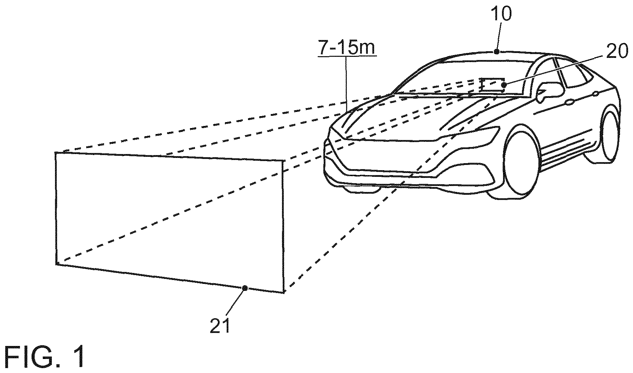

Fig. 1 veranschaulicht die prinzipielle Funktionsweise eines Head-Up Displays. Das Head-Up Display 20 ist im Fahrzeug 10 unterhalb/hinter dem Kombiinstrument im Armaturenbrettbereich angebracht. Durch Projektion auf die Windschutzscheibe werden Zusatzinformationen in das Sichtfeld des Fahrers eingeblendet. Diese Zusatzinformationen erscheinen so, als seien sie auf eine Projektionsfläche 21 im Abstand von 7 - 15 m vor dem Fahrzeug 10 projiziert. Durch diese Projektionsfläche 21 hindurch bleibt aber die reale Welt sichtbar. Mit den eingeblendeten Zusatzinformationen wird quasi eine virtuelle Umgebung erzeugt. Die virtuelle Umgebung wird theoretisch über die reale Welt gelegt und enthält die virtuellen Objekte, die den Fahrer bei der Fahrt unterstützen und informieren. Es wird aber nur auf einen Teil der Windschutzscheibe projiziert, so dass die Zusatzinformationen nicht beliebig im Sichtfeld des Fahrers angeordnet werden können.

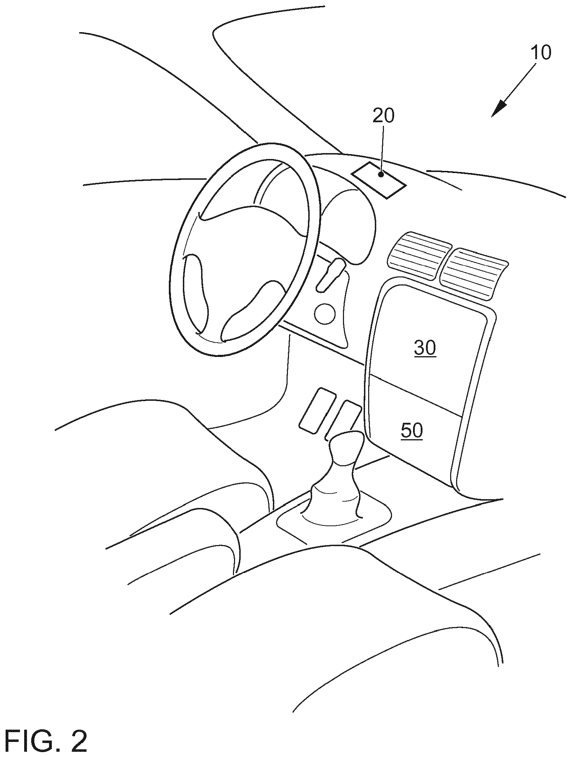

Fig. 2 zeigt das Cockpit des Fahrzeuges 10. Dargestellt ist ein Personenkraftwagen Pkw. Als Fahrzeug 10 kämen allerdings beliebige andere Fahrzeuge ebenfalls in Betracht. Beispiele von weiteren Fahrzeugen sind: Busse, Nutzfahrzeuge, insbesondere Lastkraftwagen Lkw, Landmaschinen, Baumaschinen, Schienenfahrzeuge usw. Der Einsatz der Erfindung wäre allgemein bei Landfahrzeugen, Schienenfahrzeugen, Wasserfahrzeugen und Luftfahrzeugen möglich.

In dem Cockpit sind drei Anzeigeeinheiten eines Infotainment-Systems dargestellt. Es handelt sich um das Head-Up-Display 20 und einen berührungsempfindlichen Bildschirm 30, der in der Mittelkonsole angebracht ist. Bei der Fahrt liegt die Mittelkonsole nicht im Sichtfeld des Fahrers. Deshalb werden die Zusatzinformationen während der Fahrt nicht auf der Anzeigeeinheit 30 eingeblendet.

Der berührungsempfindliche Bildschirm 30 dient dabei insbesondere zur Bedienung von Funktionen des Fahrzeugs 10. Beispielsweise können darüber ein Radio, ein Navigationssystem, eine Wiedergabe von gespeicherten Musikstücken und/oder eine Klimaanlage, andere elektronische Einrichtungen oder andere Komfortfunktionen oder Applikationen des Fahrzeugs 10 gesteuert werden. Zusammengefasst wird häufig von einem "Infotainment-System" gesprochen. Ein Infotainment-System bezeichnet bei Kraftfahrzeugen, speziell Pkw, die Zusammenführung von Autoradio, Navigationssystem, Freisprecheinrichtung, Fahrerassistenzsystemen und weiterer Funktionen in einer zentralen Bedieneinheit. Der Begriff Infotainment ist ein Kofferwort, zusammengesetzt aus den Worten Information und Entertainment (Unterhaltung). Zur Bedienung des Infotainment-Systems wird hauptsächlich der berührungsempfindliche Bildschirm 30 ("Touchscreen") benutzt, wobei dieser Bildschirm 30 insbesondere von einem Fahrer des Fahrzeugs 10, aber auch von einem Beifahrer des Fahrzeugs 10 gut eingesehen und bedient werden kann. Unterhalb des Bildschirms 30 können zudem mechanische Bedienelemente, beispielsweise Tasten, Drehregler oder Kombinationen hiervon, wie beispielsweise Drückdrehregler, in einer Eingabeeinheit 50 angeordnet sein. Typischerweise ist auch eine Lenkradbedienung von Teilen des Infotainmentsystems möglich. Diese Einheit ist nicht separat dargestellt, sondern wird als Teil der Eingabeeinheit 50 betrachtet.

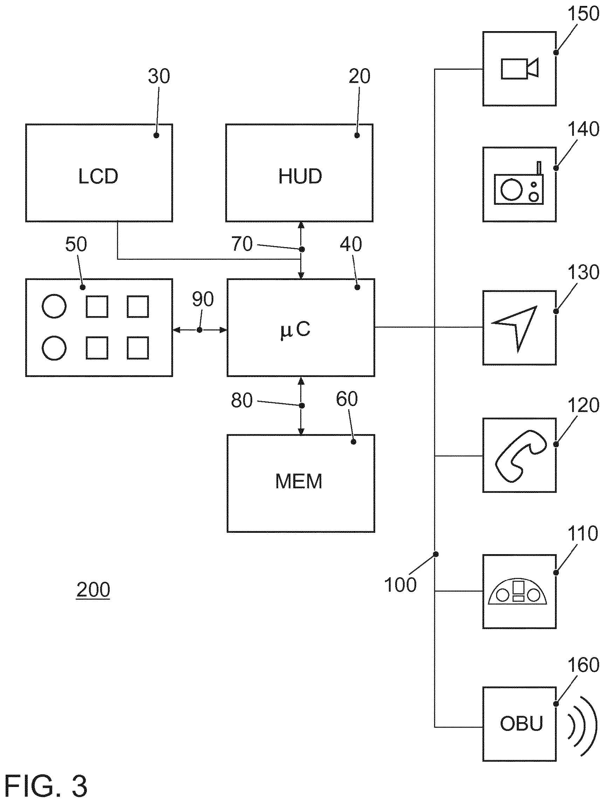

Fig. 3 zeigt schematisch ein Blockschaltbild des Infotainment-Systems 200 sowie beispielhaft einige Teilsysteme oder Applikationen des Infotainment-Systems. Die BedienungsVorrichtung umfasst die berührungsempfindliche Anzeigeeinheit 30, eine Recheneinrichtung 40, eine Eingabeeinheit 50 und einen Speicher 60. Die Anzeigeeinheit 30 umfasst sowohl eine Anzeigefläche zum Anzeigen veränderlicher grafischer Informationen als auch eine über der Anzeigefläche angeordnete Bedienoberfläche (berührungssensitive Schicht) zum Eingeben von Befehlen durch einen Benutzer.

Die Anzeigeeinheit 30 ist über eine Datenleitung 70 mit der Recheneinrichtung 40 verbunden. Die Datenleitung kann nach dem LVDS-Standard ausgelegt sein, entsprechend Low Voltage Differential Signalling. Über die Datenleitung 70 empfängt die Anzeigeeinheit 30 Steuerdaten zum Ansteuern der Anzeigefläche des Touchscreens 30 von der Recheneinrichtung 40. Über die Datenleitung 70 werden auch Steuerdaten der eingegebenen Befehle von dem Touchscreen 30 zu der Recheneinrichtung 40 übertragen. Mit der Bezugszahl 50 ist die Eingabeeinheit bezeichnet. Ihr zugehörig sind die schon erwähnten Bedienelemente wie Tasten, Drehregler, Schieberegler, oder Drehdrückregler, mit deren Hilfe die Bedienperson über die Menüführung Eingaben machen kann. Unter Eingabe wird allgemein das Anwählen einer ausgewählten Menüoption verstanden, wie auch das Ändern eines Parameters, das Ein- und Ausschalten einer Funktion usw.

Die Speichereinrichtung 60 ist über eine Datenleitung 80 mit der Recheneinrichtung 40 verbunden. In dem Speicher 60 ist ein Piktogrammverzeichnis und/oder Symbolverzeichnis hinterlegt mit den Piktogrammen und/oder Symbolen für die möglichen Einblendungen von Zusatzinformationen. Hier können auch die Punkte / Symbole abgelegt sein, die für die Berechnung der Raster-Einblendung als Grundlage dienen.

Die weiteren Teile des Infotainment-Systems Kamera 150, Radio 140, Navigationsgerät 130, Telefon 120 und Kombiinstrument 110 sind über den Datenbus 100 mit der Vorrichtung zur Bedienung des Infotainment-Systems verbunden. Als Datenbus 100 kommt die Highspeed-Variante des CAN-Bus nach ISO Standard 11898-2 in Betracht. Alternativ käme z.B. auch der Einsatz eines auf Ethernet-Technologie beruhenden Bussystems wie BroadR-Reach in Frage. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus). Hier wird noch erwähnt, dass die Kamera 150 als konventionelle Videokamera ausgelegt sein kann. In diesem Fall nimmt sie 25 Vollbilder/s auf, was bei dem Interlace-Aufnahmemodus 50 Halbbilder/s entspricht. Alternativ kann eine Spezialkamera eingesetzt werden, die mehr Bilder/s aufnimmt, um die Genauigkeit der Objekterkennung bei sich schneller bewegenden Objekten zu erhöhen. Es können mehrere Kameras zur Umfeldbeobachtung eingesetzt werden. Daneben könnten auch die schon erwähnten RADAR- oder LIDAR-Systeme ergänzend oder alternativ eingesetzt werden, um die Umfeldbeobachtung durchzuführen oder zu erweitern. Für die drahtlose Kommunikation nach innen und außen ist das Fahrzeug 10 mit einem Kommunikationsmodul 160 ausgestattet. Dieses Modul wird oft auch als On-Board Unit bezeichnet. Es kann für die Mobilfunk-Kommunikation, z.B. nach LTE Standard, entsprechend Long Term Evolution, ausgelegt sein. Ebenfalls kann es für WLAN-Kommunikation, entsprechend Wireless LAN, ausgelegt sein, sei es für die Kommunikation zu Geräten der Insassen im Fahrzeug oder für die Fahrzeug-zu-Fahrzeug Kommunikation etc.

Das erfindungsgemäße Verfahren zur Berechnung einer Einblendung von Zusatzinformationen für eine Anzeige auf einer Anzeigeeinheit 20 wird im Folgenden anhand eines Ausführungsbeispiels erläutert.

Für die weiteren Figuren gilt, dass gleiche Bezugszahlen die gleichen Felder und Symbole bezeichnen wie bei der Beschreibung der Figuren 1 bis 3 erläutert.

Grundlage der erfindungsgemäßen Anzeige der Längsführungsfunktion des Fahrzeuges 10 auf dem HUD 20 ist die Anzeige eines virtuellen Rasters, das in einem Abstand über der tatsächlichen Straße oder ohne Abstand zur Straße dargestellt wird. Dabei liegt die Straße als realer Fahrbahnverlauf im Sichtfeld des Fahrers. Die AR-Einblendung mittels des HUD 20 geschieht so, wie in Fig. 4 gezeigt. Das Raster wird so projiziert, dass es auf der Straße liegt oder mit einem Abstand zur Straße "im Raum schwebt". Es ist dargestellt, dass entlang des Fahrbahnverlaufs ein Raster eingeblendet wird. Dieses erstreckt sich bis zum vorausfahrenden Fahrzeug. In der Fig. 4 ist dargestellt, dass zu dem dargestellten Zeitpunkt nur der erste Abschnitt 310 des Rasters eingeblendet wird. Der zweite Abschnitt 320 des Rasters wird anschließend zu einem zweiten Zeitpunkt eingeblendet, s. Fig. 5. Zu dem Zeitpunkt an dem der zweite Abschnitt 320 eingeblendet wird, ist der erste Abschnitt 310 des Rasters bereits wieder ausgeblendet. Durch die aufeinander folgende Einblendung von Abschnitten 310, 320 des Rasters entsteht für den Fahrer des Fahrzeuges 10 der Eindruck eines "Leitstrahls", der sich von seinem Fahrzeug 10 ausgehend hin zu dem vorausfahrenden Fahrzeug 300 bewegt. Der Eindruck, der beim Fahrer entsteht, könnte auch als ein von dem eigenen Fahrzeug 10 ausgehenden Signal beschrieben werden. Ähnliche Signalisierungen befinden sich auch an Baustellen auf Fahrbahnen, wo durch eine Steuerung von "Befeuerungslampen" z.B. der Weg zu einer Engstelle markiert wird.

Die Einteilung des Rasters in lediglich zwei Abschnitte wurde beispielhaft gewählt. In anderen Ausführungsformen könnte das Raster 22 in weitere Abschnitte eingeteilt werden, die nacheinander eingeblendet werden. Dadurch würde eine flüssigere Bewegung des Leitstrahls sichtbar werden.

Bei der nachfolgenden Beschreibung der Erfindung wird davon ausgegangen, dass der Fahrer das Fahrzeug 10 führt, aber durch ein Fahrerassistenzsystem unterstützt wird. Es wird ein Fahrerassistenzsystem zur Längsführung des Fahrzeuges 10 eingesetzt. Beispiele solcher Assistenzsysteme sind eine automatische Distanzregelung ACC, entsprechend Adaptive Cruise Control und ein Geschwindigkeitsregelungssystem GRA, entsprechend Geschwindigkeitsregelanlage. Die Erfindung wäre aber auch in gleicher Weise einsetzbar, wenn das Fahrzeug 10 vollautomatisch gesteuert werden würde. Im Folgenden wird beschrieben, welche Schritte unternommen werden, wenn sich das Fahrzeug 10 mit aktiviertem Längsführungssystem, hier ein ACC-System dem vorausfahrenden Fahrzeug 300 nähert, dieses detektiert und seine Geschwindigkeit an das vorausfahrende Fahrzeug 300 anpasst. Dies geschieht so, dass ein zuvor eingegebener Sicherheitsabstand eingehalten wird.

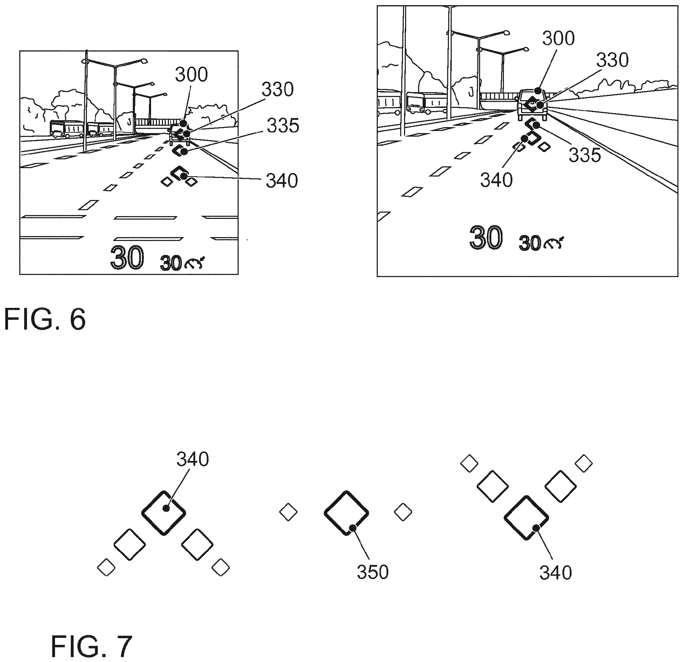

In der Fig. 6 ist gezeigt, dass das Längsführungssystem den Einrichtungsmodus bereits verlassen hat und zu einem Regelungsmodus gewechselt hat. Wie beschrieben, wurde der Einrichtungsmodus mit Hilfe der Leitstrahl-Anzeige visualisiert. Erfindungsgemäß wird der Wechsel vom Einrichtungsmodus zum Regelungsmodus wie folgt visualisiert. Die Leitstrahl-Anzeige wird verlassen und stattdessen wird eine AR-Einblendung für die Anzeige einer Objekterkennungsmarke berechnet. Im gezeigten Beispiel werden sogar zwei Objekterkennungsmarken 330 und 335 berechnet. Dabei wird die Erfassungsmarke 330 so berechnet, dass sie am Heck des vorausfahrenden Fahrzeuges 300 eingeblendet wird und das Heck des vorausfahrenden Fahrzeuges 300 markiert. Dem Fahrer wird dadurch signalisiert relativ zu welchem Fahrzeug das Längsführungssystem den Abstand und/oder die Geschwindigkeit regelt. Die zweite Erfassungsmarke 335 wird am Ende des zuvor eingeblendeten Rasters gesetzt. Im Beispiel handelt es sich bei beiden Erkennungsmarken 330, 335 um Rauten-Symbole. Dieses Vorgehen soll dem Fahrer die korrekte Objektwahrnehmung verständlich machen und eine für die Vertrauensausbildung notwendige Transparenz der technischen Prozesse herstellen.

Darüber hinaus wird eine zweite AR-Einblendung für die Anzeige einer Regelungsaktivitätsmarke 340 berechnet, die Auskunft über die Regelungsaktivität des Längsführungssystems geben soll. Als Regelungsaktivitätsmarke 340 werden im dargestellten Beispiel drei Rauten-Symbole verwendet, die je nach Regelungsaktivität unterschiedlich angeordnet werden. In Fig. 6 ist dargestellt, dass sich das Fahrzeug 10 dem vorausfahrenden Fahrzeug 300 annähert. Die Momentangeschwindigkeit des vorausfahrenden Fahrzeuges 300 ist damit noch kleiner als die bei dem Beobachterfahrzeug 10 eingegebene Sollgeschwindigkeit, die im dargestellten Fall ebenfalls in das Sichtfeld des Fahrers eingeblendet wird und mit 30 km/h angezeigt ist. Die Momentangeschwindigkeit ist ebenfalls mit 30 km/h angezeigt. Beide Geschwindigkeiten sind am unteren Bildrand eingeblendet. Die Momentangeschwindigkeit wird dabei größer dargestellt als die Sollgeschwindigkeit. Die Regelungsaktivitätsmarke 340 hat in Fig. 6 die Form eines nach vorne gerichteten Pfeils, der auch als "Vorwärtspfeil" bezeichnet werden kann. Im rechten Bild von Fig. 6 ist ein späterer Zeitpunkt dargestellt. Zu diesem Zeitpunkt hat sich das Beobachterfahrzeug 10 dem vorausfahrenden Fahrzeug weiter angenähert. Dies wird dem Fahrer dadurch signalisiert, dass die Regelungsaktivitätsmarke 335 näher zum vorausfahrenden Fahrzeug 300 eingeblendet wird. Im Beispiel besteht die Regelungsaktivitätsmarke 335 aus drei Rauten-Symbolen. Wenn die beiden seitlichen Rauten-Symbole gegenüber dem mittleren Rauten-Symbol nach hinten versetzt werden, entsteht der erwähnte "Vorwärtspfeil".

Für die Visualisierung der Regelungsaktivität werden drei Zustände vorgesehen (wie oben beschrieben). Beschleunigt das System bzw. nähert es sich aufgrund einer noch höheren Setzgeschwindigkeit einem vorausfahrenden Fahrzeug an (Verringerung der Distanz), wird der nach vorne gerichtete Pfeil als AR-Einblendung eingesetzt. Wird die Distanz konstant gehalten, erscheint ein linienartiges Neutral-Symbol als AR-Einblendung. Wird die Distanz vergrößert, weil entweder eine niedrigere Geschwindigkeit vom Fahrer gewählt oder eine größere Wunschdistanz eingestellt wurde, wird dies durch einen zum Fahrer gerichteten Pfeil "Rückwärtspfeil" visualisiert. In diesem Fall befindet sich die Regelungsaktivitätsmarke 340 aus Sicht des Fahrers noch "hinter" dem vorausfahrenden Fahrzeug 300 und wandert dann "durch" das vorausfahrende Fahrzeug zur Objektmarke 335.

In Fig. 7 sind die erwähnten Varianten einer Regelungsaktivitätsmarke 340 dargestellt. Der "Vorwärtspfeil" ist im linken Teil des Bildes dargestellt. Ein entsprechender "Rückwärtspfeil" ist im rechten Teil der Fig. 7 dargestellt. Im dargestellten Fall bestehen "Vorwärtspfeil" und "Rückwärtspfeil" aus jeweils fünf Rauten-Symbolen. Im mittleren Teil der Figur ist noch das Neutral-Symbol gezeigt, was im Folgenden als Regelungseinrast-Symbol 350 bezeichnet wird. Es besteht nur aus 3 Rauten-Symbolen, die einer Linie angeordnet sind. Die oben beschriebenen Anzeigen müssen nicht permanent angezeigt, sondern können auch ausgeblendet bzw. mit deutlich erhöhter Transparenz dargestellt werden.

Das Längsführungssystem verringert den Abstand zum vorausfahrenden Fahrzeug 300 solange, bis der im System eingestellte oder ein für die Geschwindigkeit angemessener und berechneter variabler Sicherheitsabstand zum vorausfahrenden Fahrzeug erreicht ist. Die AR-Einblendung wird so berechnet, dass dann, wenn die mittlere Raute der Regelungsaktivitätsmarke 340 mit der auf dem Boden angezeigten Erkennungsmarke 335 kongruent ist, die beiden hinteren Rauten der Regelungsaktivitätsmarke 340 nach vorne positioniert werden und seitlich der mittleren Raute auf einer Linie angeordnet werden. Sobald die mittlere Raute ("Pfeilspitze") die Erkennungsmarke überdeckt ("einrastet"), geschieht die Neupositionierung der seitlichen Rauten-Symbole. Durch dieses Vorgehen entsteht eine "Linie" hinter dem vorausfahrenden Fahrzeug 300, die dem vorausfahrenden Fahrzeug 300 folgt. Dem Fahrer des Beobachterfahrzeuges 10 wird durch diese AR-Einblendung vermittelt, dass das Fahrzeug 10 von jetzt an den Abstand zum vorausfahrenden Fahrzeug 300 konstant halten wird.

In Fig. 8 ist der Moment dargestellt, in dem die Regelaktivitätsmarke 340 die Objektmarke 335 gerade erreicht. Fig. 9 zeigt den Moment, wo aus dem Vorwärtspfeil ein Regelungs-Einrastsymbol 350 entstanden ist.

Anhand von Fig. 10 wird noch ein Computerprogramm für die Berechnung der AR-Einblendungen erläutert. Das Programm wird in der Recheneinheit 40 abgearbeitet. Der Programmstart ist mit der Bezugszahl 405 bezeichnet. Im Programmschritt 410 erfolgt die Erfassung eines vorausfahrenden Fahrzeuges. Dazu werden die von der Kamera 150 gelieferten Bilder mit den zu diesem Zweck vorgesehenen Objekterkennungsalgorithmen ausgewertet. Nachdem das vorausfahrende Fahrzeug 300 erkannt worden ist, erfolgt im Programmschritt 415 die Berechnung des Rasters für die noch folgende abschnittsweise AR-Einblendung. Vorzugsweise wird das Raster perspektivisch berechnet. Die Berechnung erfolgt weiterhin so, dass sich das Raster bis zum vorausfahrenden Fahrzeug 300 ausdehnt. Sodann erfolgt die Extraktion des 1. Abschnitts des berechneten Rasters im Schritt 420. Im Programmschritt 425 werden die extrahierten Daten für den 1. Abschnitt an das Head-Up-Display 20 übertragen. Dieses führt die Einblendung des 1. Abschnitts des Rasters durch, wie in Fig. 4 zu sehen. Die Programmschritte 430 und 435 betreffen die Extraktion des 2. Abschnitts des berechneten Rasters und die Übermittlung der extrahierten Daten an das HUD 20. Das HUD 20 wird dann den 2. Abschnitt des Rasters einblenden. Die aufeinanderfolgende Einblendung des 1. Abschnitts und des 2. Abschnitts führt zu dem Entstehen des Leitstrahl-Effektes, der zuvor beschrieben wurde. In dem Programm wird jetzt eine Schleife gebildet, in der die Schritte 415 bis 435 3-mal wiederholt werden. Danach wird das Programm mit Programmschritt 440 fortgesetzt. Darin erfolgt die Berechnung der Objektmarken 330, 335 und Regelungsaktivitätsmarke 340. Die Berechnung erfolgt unter Berücksichtigung der Momentangeschwindigkeit des Beobachterfahrzeuges 10, der Momentangeschwindigkeit des vorausfahrenden Fahrzeuges 300 und des berechneten oder eingestellten Sicherheitsabstandes. Die Momentangeschwindigkeit des vorausfahrenden Fahrzeuges kann durch fortwährende Bildauswertung der von der Kamera 150 gelieferten Bilder abgeschätzt werden. In einer anderen Ausgestaltung kann die Momentangeschwindigkeit über Car-2-Car Kommunikation von dem vorausfahrenden Fahrzeug zu dem Beobachterfahrzeug 300 übertragen werden. Im Schritt 445 erfolgt die Übermittlung der für die AR-Einblendung der Regelungsaktivitätsmarke 340 berechneten Daten an das HUD 20. Über die Schritte 440 und 445 wird wiederum im Programm eine Schleife gebildet, die so oft durchlaufen wird, bis ein Zustandswechsel stattfindet. Der Zustandswechsel ist dann gegeben, wenn die Regelungsaktivitätsmarke 340 die Objektmarke 335 erreicht hat. Wenn also die Situation vorliegt, wie in Fig. 8 gezeigt. Dann findet in dem nachfolgenden Programmschritt 450 die Berechnung der AR-Daten für die Regelungs-Einrastmarke 350 statt. Diese Daten werden dann im Programmschritt 455 an das HUD 20 übertragen. Dieses blendet dann die Regelungs-Einrastmarke 350 ein, wie in Fig. 8 dargestellt. Die Programmschritte 450 und 455 werden dann fortwährend wiederholt solange, wie die Verfolgung des vorausfahrenden Fahrzeuges 300 in dem gesetzten/berechneten Abstand andauert. Wenn dieser Zustand verlassen wird, wird das Programm im Programmschritt 460 beendet. Wenn der Fahrer eingreift und die Komfortfunktion verlässt, kann das Programm zu jeder Zeit beendet werden.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können. Das in den Patentansprüchen genannte Objekt kann ausdrücklich auch eine Person sein.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

Die Erfindung wird in den Ausführungsbeispielen am Beispiel des Einsatzes in Fahrzeugen genauer erläutert. Hier wird auch auf die Einsatzmöglichkeit bei Flugzeugen und Helikoptern zum Beispiel bei Landemanövern oder Sucheinsätzen etc. hingewiesen.

Es wird aber darauf hingewiesen, dass der Einsatz nicht darauf beschränkt ist. Die Erfindung kann immer dann eingesetzt werden, wenn mit AR-Einblendungen das Sichtfeld eines Fahrers, einer Bedienperson oder auch einfach nur einer Person mit Datenbrille angereichert werden kann.

Auch bei ferngesteuerten Geräten wie Robotern, bei denen die Fernsteuerung über einen Monitor erfolgt, auf dem ein Kamerabild wiedergegeben wird, können AR Einblendungen die Bedienung erleichtern. Also besteht hier auch eine Einsatzmöglichkeit.

### Bezugszeichenliste

- 10: Fahrzeug
- 20: Head-Up Display HUD
- 21: virtuelle Projektionsfläche
- 30: berührungsempfindliche Anzeigeeinheit
- 40: Recheneinheit
- 50: Eingabeeinheit
- 60: Speichereinheit
- 70: Datenleitung zur Anzeigeeinheit
- 80: Datenleitung zur Speichereinheit
- 90: Datenleitung zur Eingabeeinheit
- 100: Datenbus
- 110: Kombiinstrument
- 120: Telefon
- 130: Navigationsgerät
- 140: Radio
- 150: Kamera
- 160: Kommunikationsmodul
- 200: Infotainment-System
- 300: vorausfahrendes Fahrzeug
- 305: Rastersymbol
- 310: Raster (1. Abschnitt)
- 320: Raster (2. Abschnitt)
- 330: 1. Objekterkennungsmarke
- 335: 2. Objekterkennungsmarke
- 340: Regelungsaktivitätsmarke
- 350: Regelungs-Einrastmarke
- 405 -: verschiedene
- 460: Programmschritte

## Patentansprüche

1. Verfahren zur Berechnung einer AR-Einblendung, entsprechend "augmented reality"-Einblendung, von Zusatzinformationen für eine Anzeige auf einer Anzeigeeinheit (20) eines Beobachterfahrzeuges (10) oder einer Datenbrille, wobei die Einblendung von Zusatzinformationen dem Zweck der Unterstützung des Fahrers bei der Längsführung des Beobachterfahrzeuges (10) dient, wobei die Einblendung nach Art der erweiterten Realität entsprechend "augmented reality" kontaktanalog zu einem oder mehreren Objekten in der Umwelt des Beobachterfahrzeuges (10) berechnet wird, wobei die Lage eines vorausfahrenden Fahrzeuges (300) erfasst wird, wobei bei Einrichtung der Regelungsaktivität eines Längsführungssystems für das Beobachterfahrzeug (10) bei Annäherung an das vorausfahrende Fahrzeug (300) eine Animationsgrafik berechnet wird, **dadurch gekennzeichnet, dass** die Animationsgrafik so berechnet wird, dass ausgehend vom Beobachterfahrzeug (10) die Animationsgrafik abschnittsweise eingeblendet wird, wobei bei dem ersten oder einem wiederkehrenden Einblenden des Endes der Animationsgrafik eine AR-Einblendung so berechnet wird, dass am Ende des vorausfahrenden Fahrzeuges (300) kontaktanalog zum vorausfahrenden Fahrzeug (300) wenigstens eine Objekterkennungsmarke (330, 335) gesetzt wird, und
wobei zur Kenntlichmachung einer Annäherung oder Entfernung an das vorausfahrende Fahrzeug (300) eine Regelungsaktivitätsmarke (340) berechnet wird, die so berechnet, wird, dass sie bei Annäherung zum vorausfahrenden Fahrzeug (300) als Pfeil hin zum vorausfahrenden Fahrzeug (300) zwischen Beobachterfahrzeug (10) und vorausfahrendem Fahrzeug (300) eingeblendet wird, und bei Entfernung vom vorausfahrenden Fahrzeug (300) als Pfeil weg vom vorausfahrenden Fahrzeug (300) zwischen Beobachterfahrzeug (10) und vorausfahrendem Fahrzeug (300) eingeblendet wird, wobei in einem Längsführungssystem zur Abstandsregelung oder Geschwindigkeitsregelung die Regelungsaktivitätsmarke (340) so berechnet wird, dass sie bei einer Annäherung an das vorausfahrende Fahrzeug (300) sich auf das vorausfahrende Fahrzeug hinzubewegt,
wobei bei Erreichen des Sollabstandes oder der Sollgeschwindigkeit die Regelungsaktivitätsmarke (340) so berechnet wird, dass sie das Ende der Animationsgrafik, an der Position des vorausfahrenden Fahrzeuges (300) erreicht und mit der Objekterkennungsmarke (335) verschmilzt, wobei wenigstens ein Seitenteil der Regelungsaktivitätsmarke (340) sich neben der Objekterkennungsmarke (335) kontaktanalog anlagert.

2. Verfahren nach Anspruch 1, wobei die AR-Einblendung so berechnet wird, dass zwei Objekterkennungsmarken (330, 335) gesetzt werden, wobei eine Objekterkennungsmarke (335) so berechnet wird, dass sie das Ende des Bereichs auf dem Boden hinter dem Fahrzeug markiert und die andere Objekterkennungsmarke (330) das Heck des vorausfahrenden Fahrzeuges (300) markiert.

3. Verfahren nach einem der vorhergehenden Ansprüche, wobei die Regelungsaktivitätsmarke (340) so berechnet wird, dass sie die Regelungsaktivität des Längsführungssystems anzeigt, wobei wenigstens drei verschiedene Zustände unterschieden werden, wobei ein in Fahrtrichtung gerichteter Pfeil gebildet wird, wenn die Sollgeschwindigkeit des Längsführungssystems noch größer ist als die Momentangeschwindigkeit des Beobachterfahrzeuges (300) oder die Entfernung zum vorausfahrenden Fahrzeug (300) noch größer ist als der Sollabstand, wobei ein nach hinten gerichteter Pfeil gebildet wird, wenn die Sollgeschwindigkeit des Geschwindigkeitsregelungssystems kleiner ist als die Momentangeschwindigkeit des Beobachterfahrzeuges (10), oder die Entfernung zum vorausfahrenden Fahrzeug (300) noch kleiner ist als der Sollabstand, und wobei die Seitenteile der Regelungsaktivitätsmarke (340) so positioniert werden, dass eine linienartige Regelungs-Einrastmarke (350) gebildet wird, wenn die Ist-Geschwindigkeit mit der Sollgeschwindigkeit des Geschwindigkeitsregelungssystems übereinstimmt oder die Entfernung mit dem Sollabstand übereinstimmt.

4. Verfahren nach einem der vorhergehenden Ansprüche, wobei die Animationsgrafik in Rasterform bestehend aus einer Vielzahl von Rasterelementen (305) berechnet wird.

5. Vorrichtung zur Durchführung des Verfahrens nach einem der vorhergehenden Ansprüche, aufweisend eine Anzeigeeinheit (20), mit der virtuelle Zusatzinformationen in das Sichtfeld des Fahrers oder der Bedienperson des Objektes eingeblendet werden können, und eine Recheneinheit (40), wobei das Fahrzeug (10) Erfassungsmittel (110, 150) aufweist, die die Umgebung des Fahrzeuges (10) erfassen, wobei die Recheneinheit (40) ausgelegt ist, die Lage eines vorausfahrenden Fahrzeuges (300) zu berechnen und die Bewegung des Beobachterfahrzeuges (10) relativ zu dem vorausfahrenden Fahrzeug (300) zu berechnen, wobei die Recheneinheit (40) so ausgelegt ist bei Einrichtung der Regelungsaktivität eines Längsführungssystems für das Beobachterfahrzeug (10) bei Erkennung einer Annäherung an das vorausfahrende Fahrzeug (300) eine Animationsgrafik zu berechnen, **dadurch gekennzeichnet, dass** die Animationsgrafik so berechnet wird, das ausgehend vom Beobachterfahrzeug (10) die Animationsgrafik abschnittsweise eingeblendet wird,
wobei bei dem ersten oder einem wiederkehrenden Einblenden des Endes der Animationsgrafik eine AR-Einblendung so berechnet wird, dass am Ende des vorausfahrenden Fahrzeuges (300) kontaktanalog zum vorausfahrenden Fahrzeug (300) wenigstens eine Objekterkennungsmarke (330, 335) gesetzt wird,
wobei zur Kenntlichmachung einer Annäherung oder Entfernung an das vorausfahrende Fahrzeug (300) die Recheneinheit (40) so ausgelegt ist eine Regelungsaktivitätsmarke (340) so zu berechnen, dass sie bei Annäherung zum vorausfahrenden Fahrzeug (300) als Pfeil hin zum vorausfahrenden Fahrzeug (300) zwischen Beobachterfahrzeug (10) und vorausfahrendem Fahrzeug (300) eingeblendet wird, und bei Entfernung vom vorausfahrenden Fahrzeug (300) als Pfeil weg vom vorausfahrenden Fahrzeug (300) zwischen Beobachterfahrzeug (10) und vorausfahrendem Fahrzeug (300) eingeblendet wird, wobei die Recheneinheit (40) in einem Längsführungssystem zur Abstandsregelung oder Geschwindigkeitsregelung so ausgelegt ist die Regelungsaktivitätsmarke (340) so zu berechnen, dass sie bei einer Annäherung an das vorausfahrende Fahrzeug (300) sich auf das vorausfahrende Fahrzeug (300) hinzubewegt,
und bei Erreichen des Sollabstandes oder der Sollgeschwindigkeit die Regelungsaktivitätsmarke (340) so zu berechnen, dass sie das Ende der Animationsgrafik, an der Position des vorausfahrenden Fahrzeuges (300) erreicht und mit der Objekterkennungsmarke (335) verschmilzt, und wenigstens ein Seitenteil der Regelungsaktivitätsmarke (340) sich neben der Objekterkennungsmarke (335) kontaktanalog anlagert.

6. Vorrichtung nach Anspruch 5, wobei die Recheneinheit (40) weiterhin so ausgelegt ist die Berechnungen nach einem der Ansprüche 1 bis 4 durchzuführen.

7. Vorrichtung nach Anspruch 5 oder 6, wobei die Anzeigeeinheit (20) ein Head-Up Display (HUD) oder eine Datenbrille ist.

8. Kraftfahrzeug, **dadurch gekennzeichnet, dass** das Kraftfahrzeug (10) eine Vorrichtung nach einem der Ansprüche 5 bis 7 aufweist.

9. Computerprogramm, **dadurch gekennzeichnet, dass** das Computerprogramm ausgelegt ist, bei Abarbeitung in einer Recheneinheit (40) die Schritte des Verfahrens zur Berechnung einer AR-Einblendung von Zusatzinformationen für eine Anzeige auf einer Anzeigeeinheit (20) nach einem der Ansprüche 1 bis 4 durchzuführen.

## Claims

1. Method for computing an AR-superposition, corresponding to "augmented reality" superposition, of additional information for display on a display unit (20) of an observer vehicle (10) or a pair of smartglasses, wherein the superposition of additional information is used to support the driver in the longitudinal control of the observer vehicle (10), wherein the superposition is computed in the manner of the enhanced reality corresponding to "augmented reality" in a contact-analogous manner to one or more objects in the vicinity of the observer vehicle (10), wherein the position of a vehicle (300) travelling in front is captured, wherein, in the case of the regulation activity of a longitudinal control system for the observer vehicle (10) being established, an animation graphic is computed when approaching the vehicle (300) travelling in front, **characterized in that** the animation graphic is computed such that the animation graphic is superposed section by section starting from the observer vehicle (10), wherein, in the case of the first or a recurring superposition of the end of the animation graphic, an AR-superposition is computed in such a way that at least one object recognition mark (330, 335) is placed at the end of the vehicle (300) travelling in front in a contact-analogous manner to the vehicle (300) travelling in front, and wherein, for the purpose of indicating an approach towards or a movement away from the vehicle (300) travelling in front, a regulation activity mark (340) is computed, which is computed in such a way that it is superposed in the form of an arrow pointing towards the vehicle (300) travelling in front between the observer vehicle (10) and the vehicle (300) travelling in front in the case of an approach towards the vehicle (300) travelling in front, and it is superposed in the form of an arrow pointing away from the vehicle (300) travelling in front between the observer vehicle (10) and the vehicle (300) travelling in front in the case of a movement away from the vehicle (300) travelling in front, wherein the regulation activity mark (340) is computed in a longitudinal control system for regulating distance or speed such that it moves towards the vehicle travelling in front in the case of an approach towards the vehicle (300) travelling in front,
wherein, when the target distance or the target speed is reached, the regulation activity mark (340) is computed such that it reaches the end of the animation graphic at the position of the vehicle (300) travelling in front and merges with the object recognition mark (335), wherein at least one side part of the regulation activity mark (340) attaches itself in a contact-analogous manner next to the object recognition mark (335).

2. Method according to Claim 1, wherein the AR-superposition is computed in such a way that two object recognition marks (330, 335) are placed, wherein one object recognition mark (335) is computed such that it marks the end of the region on the ground behind the vehicle and the other object recognition mark (330) marks the tailgate of the vehicle (300) travelling in front.

3. Method according to either of the preceding claims, wherein the regulation activity mark (340) is computed such that it indicates the regulation activity of the longitudinal control system, wherein at least three different states are differentiated, wherein an arrow pointing in the driving direction is formed if the target speed of the longitudinal control system is still greater than the instantaneous speed of the observer vehicle (300) or the distance from the vehicle (300) travelling in front is still greater than the target distance, wherein an arrow pointing backwards is formed if the target speed of the speed regulation system is less than the instantaneous speed of the observer vehicle (10) or the distance from the vehicle (300) travelling in front is still smaller than the target distance, and wherein the side parts of the regulation activity mark (340) are positioned in such a way that a line-type regulation latching mark (350) is formed if the current speed matches the target speed of the speed regulation system or the distance matches the target distance.

4. Method according to one of the preceding claims, wherein the animation graphic is computed in the form of a grid consisting of a multiplicity of grid elements (305) .

5. Apparatus for carrying out the method according to one of the preceding claims, having a display unit (20), with which virtual additional information can be superposed into the field of view of the driver or the operator of the object, and a computing unit (40), wherein the vehicle (10) has capturing means (110, 150) which capture the environment of the vehicle (10), wherein the computing unit (40) is designed to compute the position of a vehicle (300) travelling in front and to compute the movement of the observer vehicle (10) relative to the vehicle (300) travelling in front, wherein the computing unit (40) is designed in such a way that, in the case of the regulation activity of a longitudinal control system for the observer vehicle (10) being established, it computes an animation graphic when detecting an approach towards the vehicle (300) travelling in front, **characterized in that** the animation graphic is computed such that the animation graphic is superposed section by section starting from the observer vehicle (10), wherein, in the case of the first or a recurring superposition of the end of the animation graphic, an AR-superposition is computed in such a way that at least one object recognition mark (330, 335) is placed at the end of the vehicle (300) travelling in front in a contact-analogous manner to the vehicle (300) travelling in front,
wherein, for the purpose of indicating an approach towards or a movement away from the vehicle (300) travelling in front, the computing unit (40) is designed to compute a regulation activity mark (340) in such a way that it is superposed in the form of an arrow pointing towards the vehicle (300) travelling in front between the observer vehicle (10) and the vehicle (300) travelling in front in the case of an approach towards the vehicle (300) travelling in front, and it is superposed in the form of an arrow pointing away from the vehicle (300) travelling in front between the observer vehicle (10) and the vehicle (300) travelling in front in the case of a movement away from the vehicle (300) travelling in front, wherein the computing unit (40) in a longitudinal control system for regulating the distance or speed is designed to compute the regulation activity mark (340) such that it moves towards the vehicle (300) travelling in front in the case of an approach towards the vehicle (300) travelling in front,
and, when the target distance or the target speed is reached, to compute the regulation activity mark (340) such that it reaches the end of the animation graphic at the position of the vehicle (300) travelling in front and merges with the object recognition mark (335), and at least one side part of the regulation activity mark (340) attaches itself in a contact-analogous manner next to the object recognition mark (335).

6. Apparatus according to Claim 5, wherein the computing unit (40) is furthermore designed to perform the computations according to one of Claims 1 to 4.

7. Apparatus according to Claim 5 or 6, wherein the display unit (20) is a head-up display (HUD) or a pair of smartglasses.

8. Motor vehicle, **characterized in that** the motor vehicle (10) has an apparatus according to one of Claims 5 to 7.

9. Computer program, **characterized in that** the computer program, when it is executed in a computing unit (40), is designed to carry out the steps of the method for computing an AR-superposition of additional information for display on a display unit (20) according to one of Claims 1 to 4.

## Revendications

1. Procédé de calcul d'une incrustation en AR, correspondant à une incrustation en « réalité augmentée », d'informations supplémentaires pour un affichage sur une unité d'affichage (20) d'un véhicule d'observateur (10) ou une paire de lunettes connectée, l'incrustation d'informations supplémentaires servant à des fins d'assistance au conducteur lors du guidage longitudinal du véhicule d'observateur (10), l'incrustation étant calculée à la manière de la « réalité augmentée », correspondant à la réalité étendue, de manière analogue à un contact avec un ou plusieurs objets dans l'environnement du véhicule d'observateur (10), la position d'un véhicule qui précède (300) étant détectée, un graphique d'animation étant calculé lors de l'ajustement de l'activité de régulation d'un système de guidage longitudinal pour le véhicule d'observateur (10) lors de l'approche du véhicule qui précède (300), **caractérisé en ce que** le graphique d'animation est calculé de telle sorte qu'à partir du véhicule d'observateur (10), le graphique d'animation est incrusté par portion, une incrustation en AR étant calculée lors de la première incrustation ou d'une incrustation récurrente de la fin du graphique d'animation de telle sorte qu'au moins un repère de reconnaissance d'objet (330, 335) est placé à la fin du véhicule qui précède (300) de manière analogue à un contact avec le véhicule qui précède (300), et
en vue de rendre reconnaissable une approche ou un éloignement par rapport au véhicule qui précède (300), un repère d'activité de régulation (340) est calculé, lequel est calculé de telle sorte que lors de l'approche par rapport au véhicule qui précède (300), il est incrusté sous la forme d'une flèche en direction du véhicule qui précède (300) entre le véhicule d'observateur (10) et le véhicule qui précède (300) et, en cas d'éloignement par rapport au véhicule qui précède (300), il est incrusté sous la forme d'une flèche à l'opposé du véhicule qui précède (300) entre le véhicule d'observateur (10) et le véhicule qui précède (300), le repère d'activité de régulation (340) étant calculé dans un système de guidage longitudinal destiné à réguler la distance ou à réguler la vitesse de telle sorte qu'il se déplace vers le véhicule qui précède lors d'une approche par rapport au véhicule qui précède (300),
lorsque la distance de consigne ou la vitesse de consigne est atteinte, le repère d'activité de régulation (340) étant calculé de telle sorte qu'il atteint la fin du graphique d'animation à la position du véhicule qui précède (300) et fusionne avec le repère de reconnaissance d'objet (335), au moins une partie latérale du repère d'activité de régulation (340) se déposant de manière analogue à un contact à côté du repère de reconnaissance d'objet (335).

2. Procédé selon la revendication 1, l'incrustation en AR étant calculée de telle sorte que deux repères de reconnaissance d'objet (330, 335) sont définis, un repère de reconnaissance d'objet (335) étant calculé de telle sorte qu'il repère la fin de la zone sur le sol derrière le véhicule et l'autre repère de reconnaissance d'objet (330) repère l'arrière du véhicule qui précède (300).

3. Procédé selon l'une des revendications précédentes, le repère d'activité de régulation (340) étant calculé de telle sorte qu'il indique l'activité de régulation du système de guidage longitudinal, au moins deux états différents étant distingués, une flèche orientée dans le sens du déplacement étant formée lorsque la vitesse de consigne du système de guidage longitudinal est encore supérieure à la vitesse momentanée du véhicule d'observateur (300) ou la distance par rapport au véhicule qui précède (300) est encore supérieure à la distance de consigne, une flèche orientée vers l'arrière étant formée lorsque la vitesse de consigne du système de régulation de vitesse est inférieure à la vitesse momentanée du véhicule d'observateur (10) ou la distance par rapport au véhicule qui précède (300) est encore inférieure à la distance de consigne, et les parties latérales du repère d'activité de régulation (340) étant positionnées de telle sorte qu'un repère de verrouillage de régulation (350) de type ligne est formé lorsque la vitesse réelle coïncide avec la vitesse de consigne du système de régulation de vitesse ou la distance coïncide avec la distance de consigne.

4. Procédé selon l'une des revendications précédentes, le graphique d'animation étant calculé sous la forme d'une grille composée d'une pluralité d'éléments de grille (305).

5. Dispositif pour mettre en œuvre un procédé selon l'une des revendications précédentes, comprenant une unité d'affichage (20) avec laquelle des informations supplémentaires virtuelles peuvent être incrustées dans le champ de vision du conducteur ou de l'opérateur de l'objet, et une unité de calcul (40), le véhicule (10) possédant des moyens de détection (110, 150) qui détectent l'environnement du véhicule (10), l'unité de calcul (40) étant conçue pour calculer la position d'un véhicule qui précède (300) et pour calculer le mouvement du véhicule d'observateur (10) par rapport au véhicule qui précède (300), l'unité de calcul (40) étant conçue de manière à calculer un graphique d'animation lors de l'ajustement de l'activité de régulation d'un système de guidage longitudinal pour le véhicule d'observateur (10) lors de la reconnaissance d'une approche du véhicule qui précède (300), **caractérisé en ce que** le graphique d'animation est calculé de telle sorte qu'à partir du véhicule d'observateur (10), le graphique d'animation est incrusté par portion, une incrustation en AR étant calculée lors de la première incrustation ou d'une incrustation récurrente de la fin du graphique d'animation de telle sorte qu'au moins un repère de reconnaissance d'objet (330, 335) est placé à la fin du véhicule qui précède (300) de manière analogue à un contact avec le véhicule qui précède (300),
en vue de rendre reconnaissable une approche ou un éloignement par rapport au véhicule qui précède (300), l'unité de calcul (40) étant conçue de manière à calculer un repère d'activité de régulation (340) de telle sorte que lors de l'approche par rapport au véhicule qui précède (300), il est incrusté sous la forme d'une flèche en direction du véhicule qui précède (300) entre le véhicule d'observateur (10) et le véhicule qui précède (300) et, en cas d'éloignement par rapport au véhicule qui précède (300), il est incrusté sous la forme d'une flèche à l'opposé du véhicule qui précède (300) entre le véhicule d'observateur (10) et le véhicule qui précède (300), l'unité de calcul (40) dans un système de guidage longitudinal destiné à réguler la distance ou à réguler la vitesse étant conçue de manière à calculer le repère d'activité de régulation (340) de telle sorte qu'il se déplace vers le véhicule qui précède (300) lors d'une approche par rapport au véhicule qui précède (300),
et lorsque la distance de consigne ou la vitesse de consigne est atteinte, calculer le repère d'activité de régulation (340) de telle sorte qu'il atteint la fin du graphique d'animation à la position du véhicule qui précède (300) et fusionne avec le repère de reconnaissance d'objet (335), et au moins une partie latérale du repère d'activité de régulation (340) se dépose de manière analogue à un contact à côté du repère de reconnaissance d'objet (335).

6. Dispositif selon la revendication 5, l'unité de calcul (40) étant en outre conçue de manière à exécuter les calculs selon l'une des revendications 1 à 4.

7. Dispositif selon la revendication 5 ou 6, l'unité d'affichage (20) étant un afficheur tête haute (HUD) ou une paire de lunettes connectées.

8. Véhicule automobile, **caractérisé en ce que** le véhicule automobile (10) comporte un dispositif selon l'une des revendications 5 à 7.

9. Programme informatique, **caractérisé en ce que** le programme informatique est conçu pour, lors de l'exécution dans une unité de calcul (40), mettre en œuvre les étapes du procédé de calcul d'une incrustation en AR d'informations supplémentaires pour un affichage sur une unité d'affichage (20) selon l'une des revendications 1 à 4.
